# EUROPEAN PATENT SPECIFICATION

(11) **EP 3 339 624 B1**
(45) Date of publication and mention of the grant of the patent: **19.02.2020**
(21) Application number: 17207988.1
(22) Date of filing: 18.12.2017
(51) Int. Cl.: F02M 35/02, F01M 13/00, F02M 25/06, F02M 35/10, F02M 35/12, F02M 35/14

(54) **INTERNAL COMBUSTION ENGINE AIR CLEANER**
LUFTREINIGER EINES VERBRENNUNGSMOTORS
ÉPURATEUR D'AIR POUR MOTEUR À COMBUSTION INTERNE

(30) Priority: 26.12.2016 JP 2016251934
(43) Date of publication of application: 27.06.2018
(73) Proprietor: Toyota Boshoku Kabushiki Kaisha, Kariya-shi, Aichi 448-8651 (JP)
(72) Inventor: NAKAO, Shinya, Kariya-shi, Aichi 448-8651 (JP); KATO, Shinya, Kariya-shi, Aichi 448-8651 (JP)
(74) Representative: TBK

(56) References cited:
- JP-A- H09 112 358
- JP-A- 2005 083 268
- JP-A- 2014 122 583
- JP-U- S6 446 414

## Description

The present invention relates to an internal combustion engine air cleaner according to the preamble of claim 1 or 2.

It is common to provide air cleaners in the intake channels of internal combustion engines for filtration of intake air. Some air cleaners are provided with a case having an inlet, a cap having an outlet, and a filter element between an opening in the case and an opening in the cap that faces the case opening.

In an internal combustion engine, it is common to install a PCV (Positive Crankcase Ventilation) system whereby blow-by gas that has built up in the crankcase is circulated through the intake air channel. In a PCV system, blow-by gas in the crankcase is allowed to flow into the cylinder head cover through a channel formed in the cylinder block and cylinder head. When the blow-by gas runs through an oil mist separator formed inside a cylinder head cover, some of the oil mist contained in the blow-by gas becomes separated and is removed. The blow-by gas from which the oil mist has been removed gets circulated from the cylinder head cover to the intake air channel by way of a hose.

JP 2005 083 268 A shows a generic internal combustion engine air cleaner according to the preamble of claim 1 or claim 2. JP S64 46414 U shows another air cleaner. JP 2000 054923 A discloses an air cleaner wherein a hose communicates with the interior of the air cleaner cap. A plurality of ribs protruded from the outer side of the cap and the outer side of an air cleaner case also described therein, or alternatively from the inner side of the cap. A cover is also provided in order to cover the ribs. A plurality of other ribs aligned in an alternating manner with these ribs protrude from the inner side of the cover, forming a labyrinth structure. When blow-by gas passes through the inside of the cover in the above-described air cleaner, the oil mist becomes separated by being impacted with the ribs.

In conventional air cleaners, including the one described in JP 2000 054923 A, the hose forming part of the blow-by gas circulating channel is disposed between the cap and the engine main body side, including the cylinder head cover. The hose is formed of a rubber material and is therefore somewhat rigid. With its poor flexibility, the hose can be difficult to attach when an obstacle is present between the joint on the engine body side and the joint on the cap side.

This can potentially be dealt with by using a specially-designed hose that avoids a given obstacle. Such a design naturally requires a hose with a specialized shape designed to avoid the obstacle, but this creates a problem of additional complexity in the structure surrounding the air cleaner.

It is an object of the present invention to provide an internal combustion engine air cleaner that simplifies the configuration surrounding the air cleaner.

The object is achieved by an internal combustion engine air cleaner having the features of claim 1 or claim 2. Advantageous further developments of the present invention are set out in the dependent claims.

With this configuration, assembly of the case and cap of the air cleaner results in a communicating relationship between the case channel and the cap channel, which serve as parts of the circulating channel through which the internal combustion engine blow-by gas is caused to circulate to the intake air channel. This permits shortening of the length of the hose forming part of the blow-by gas circulating channel, or even elimination of the hose itself, and it also allows the configuration of the parts surrounding the air cleaner to be simplified.

Other aspects and advantages of the embodiments will become apparent from the following description, taken in conjunction with the accompanying drawings, illustrating by way of example the principles of the invention.

The embodiments, together with objects and advantages thereof, may best be understood by reference to the following description of the presently preferred embodiments together with the accompanying drawings in which:
Fig. 1 is a perspective view showing the entirety of an internal combustion engine air cleaner according to one embodiment of the present invention.
Fig. 2 is an exploded perspective view of the air cleaner of Fig. 1.
Fig. 3 is a cross-sectional view taken along line 3-3 of Fig. 1.
Fig. 4 is a perspective view of the case of the air cleaner viewed from the top side.
Fig. 5 is a perspective view of the cap of the air cleaner viewed from the top side.
Fig. 6 is a perspective view of a first molded case of the air cleaner viewed from the bottom side.
Fig. 7 is a perspective view of a second molded case of the air cleaner viewed from the top side.
Fig. 8 is a perspective view of a first molded cap of the air cleaner viewed from the top side.
Fig. 9 is a perspective view of the first molded cap of Fig. 8, viewed from the bottom side.
Fig. 10 is a perspective view of a second molded cap of the air cleaner viewed from the top side.
Fig. 11 is a perspective view of the second molded cap of Fig. 10, viewed from the bottom side.
Fig. 12 is a magnified exploded perspective view showing a portion of the case channel and the cap channel of the air cleaner of Fig. 1.
Fig. 13 is a magnified plan view showing a portion of the case channel and the cap channel of the air cleaner of Fig. 1.
Fig. 14 is a cross-sectional view taken along line 14-14 of Fig. 13.
Fig. 15 is a cross-sectional view taken along line 15-15 of Fig. 13.

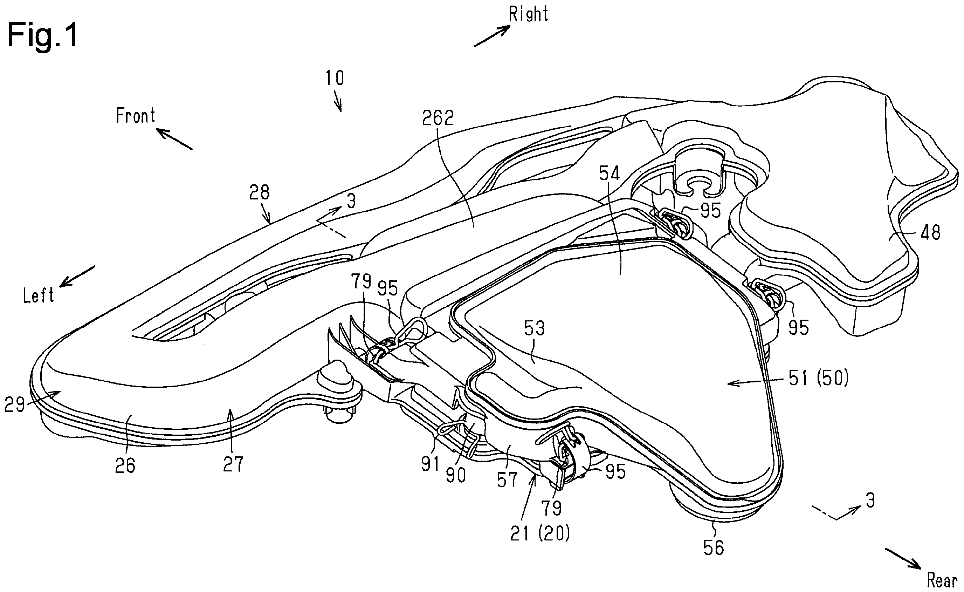

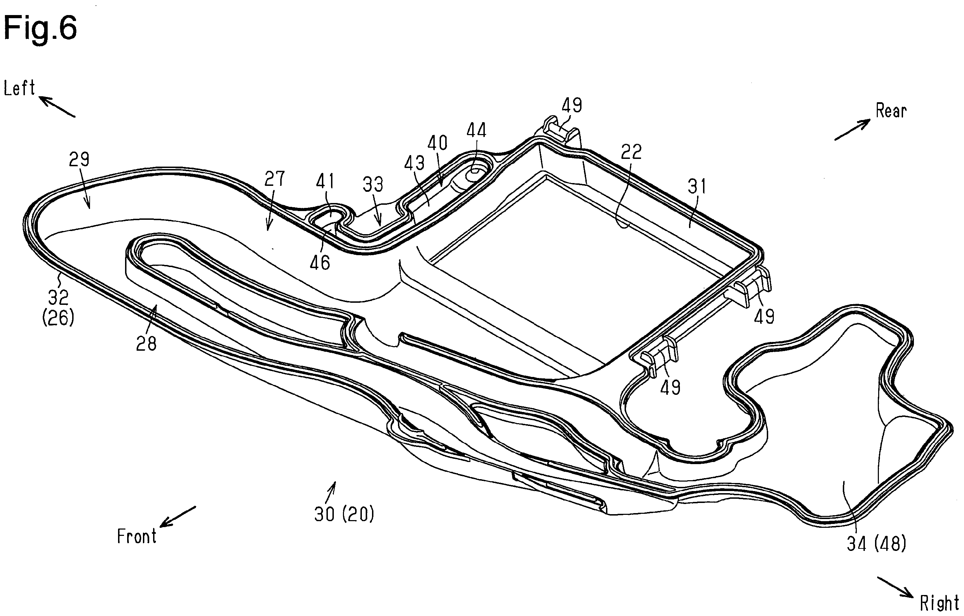

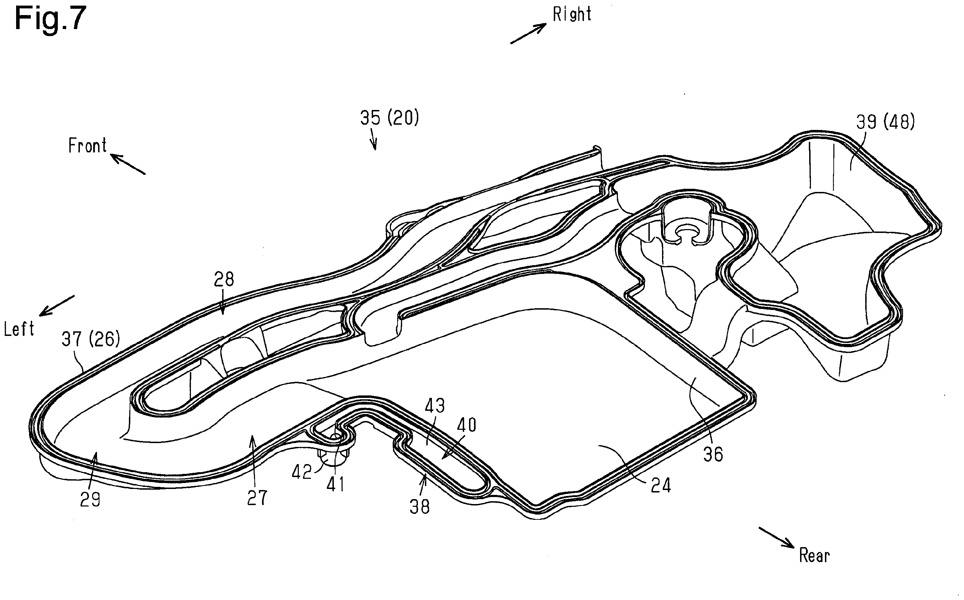

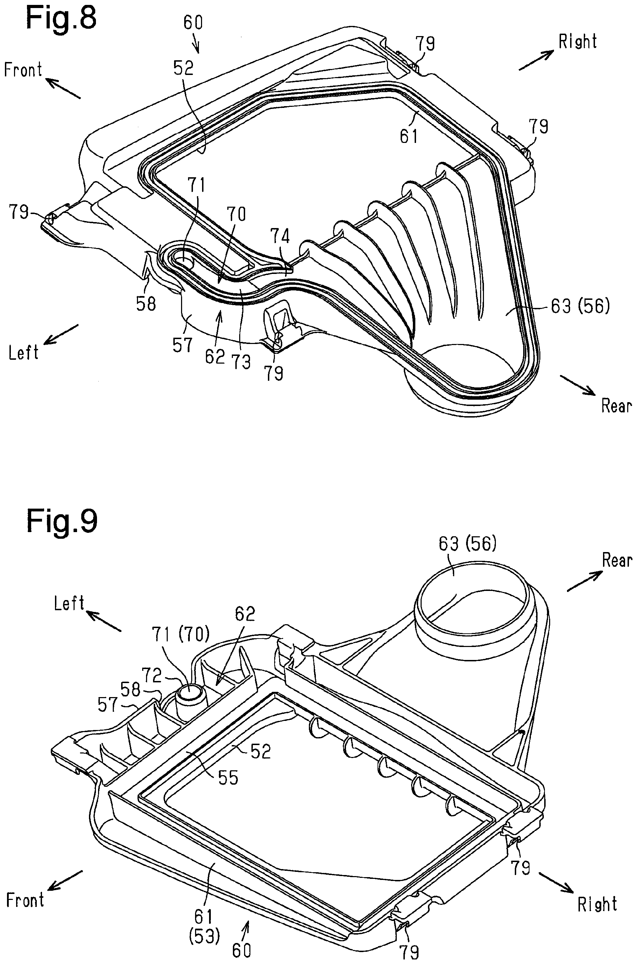

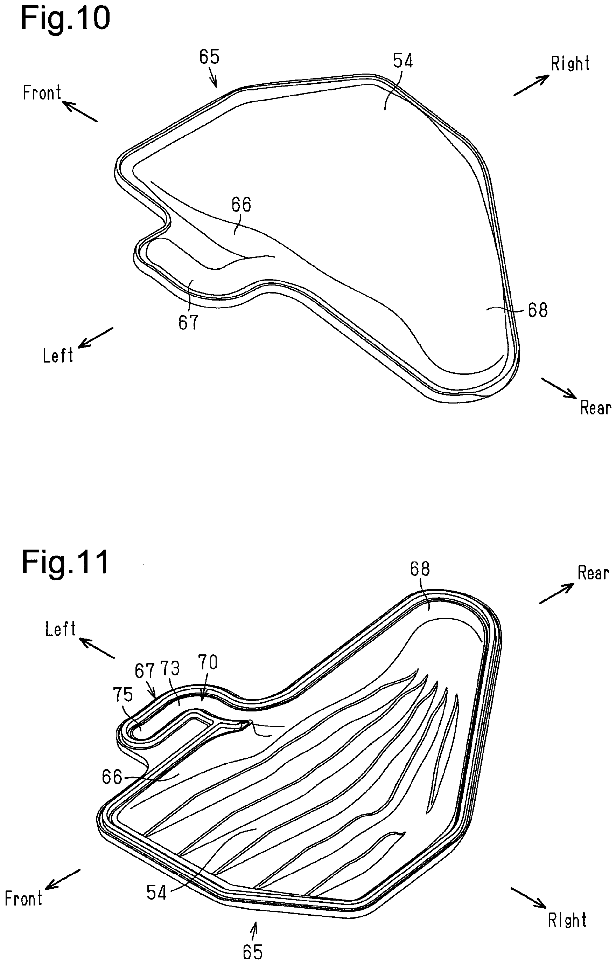

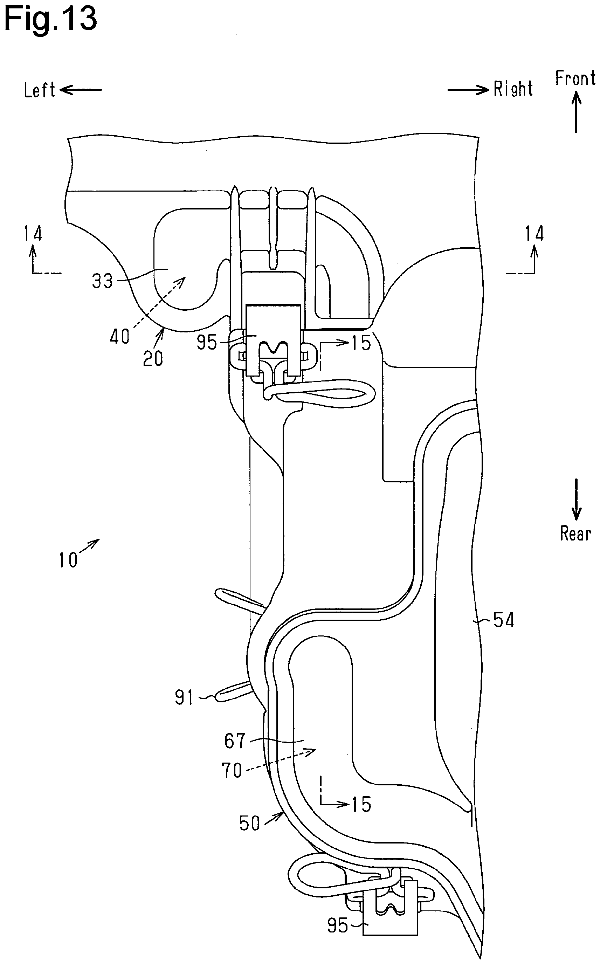

One embodiment of the present invention, which is an internal combustion engine air cleaner (hereinafter referred to as "air cleaner 10") mounted in a vehicle engine room, will now be described with reference to Figs. 1 to 15.

In the following description, the front side and the rear side in the front-rear direction of the vehicle will be simply referred to as "front side" and "rear side," respectively. Similarly, the right and left sides as viewed from the rear of the vehicle looking forward will be simply referred to as "right side" and "left side," respectively.

As shown in Figs. 1 to 3, the air cleaner 10 includes a case 20 having an integrally formed inlet duct 26, a cap 50 with an outlet 56, and a filter element 80 provided between a rectangular opening 22 formed at the upper part of the case 20 and a rectangular opening 52 formed at the bottom of the cap 50 facing the opening 22.

### <Case 20>

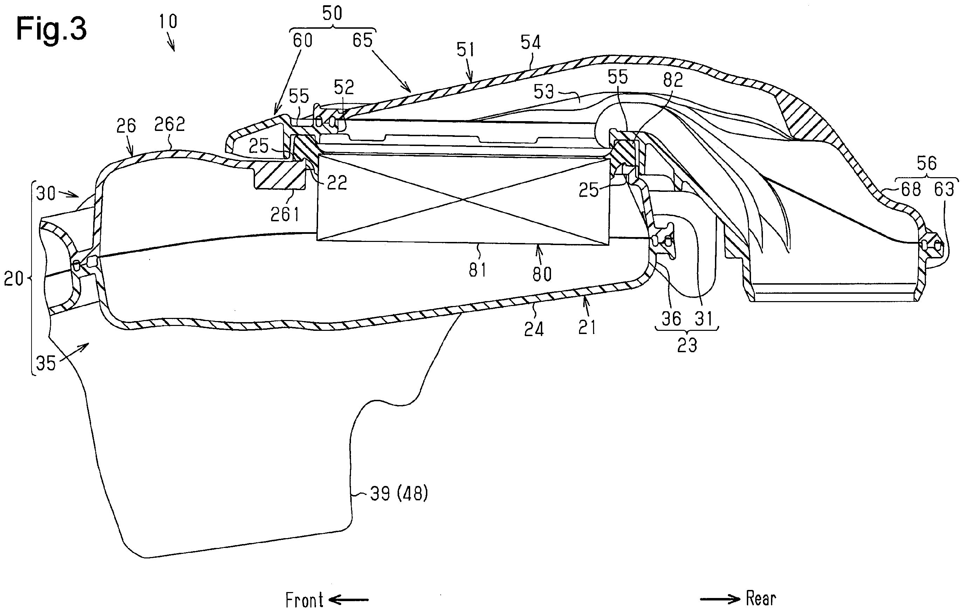

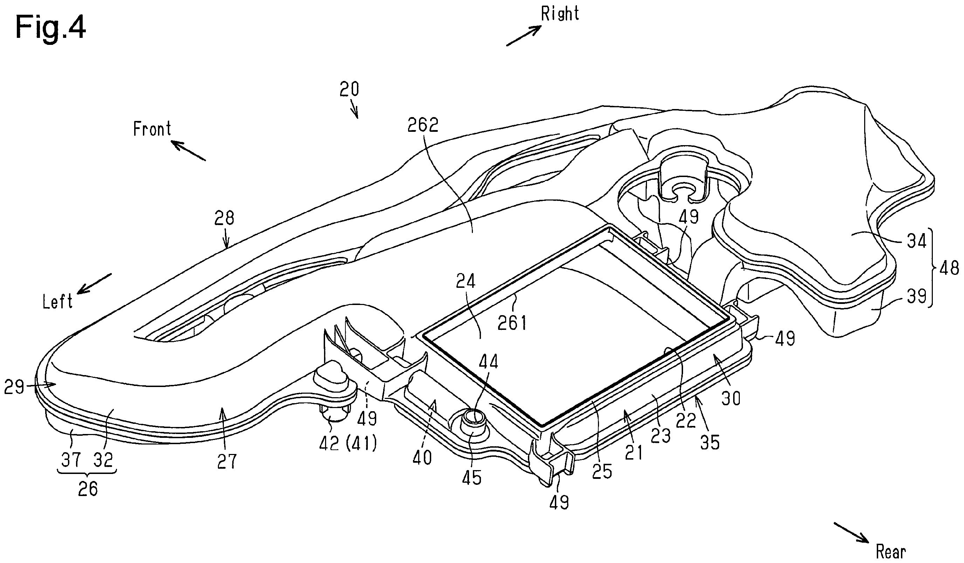

As shown in Fig. 3 and Fig. 4, the case 20 includes a flat-shaped case body 21 having a bottom wall 24 and a peripheral wall 23 surrounding the opening 22, an inlet duct 26 connected to the peripheral wall 23, and a resonator 48 connected in the path of the inlet duct 26.

As shown in Fig. 3, a flange 25 is formed along the entire peripheral edge of the opening 22.

As shown in Fig. 4, a case channel 40 is formed at the left side edge of the peripheral wall 23, constituting a part of a circulating channel that serves to circulate blow-by gas of the internal combustion engine to the intake air channel.

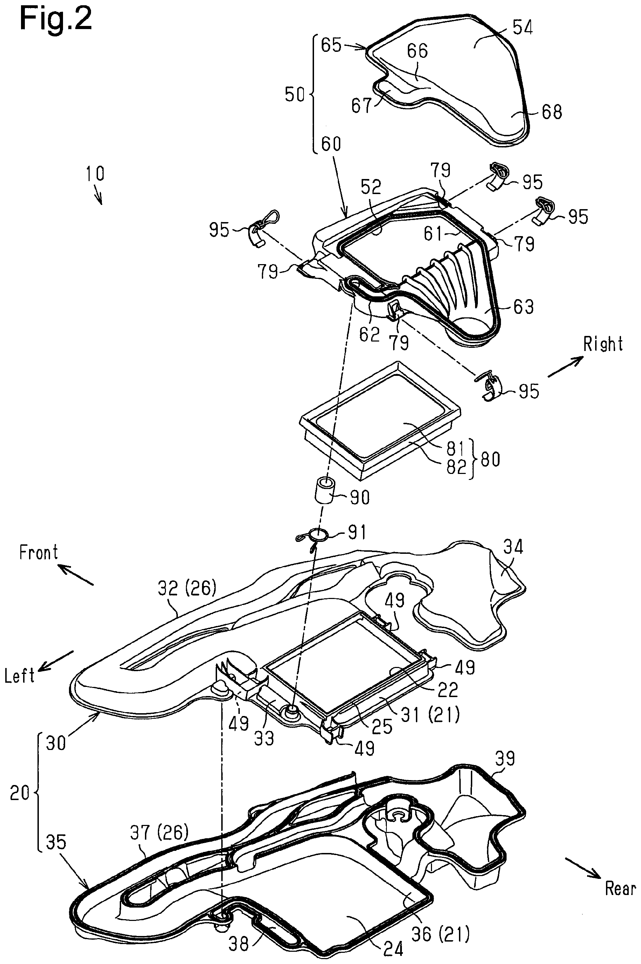

At each of the four corners of the case body 21, a catch 49 is formed for tightening of a clamp 95 that is to fasten the case 20 and cap 50 (see Fig. 1 and Fig. 2).

As shown in Fig. 3 and Fig. 4, the inlet duct 26 has a joint 261 extending in the peripheral direction while being connected to the front side of the peripheral wall 23 of the case body 21, and a bulging section 262 bulging out from the joint 261 toward the front side. The joint 261 is formed along the entire width of the front side of the peripheral wall 23.

The inlet duct 26 has a first extension 27 extending from the bulging section 262 toward the left side along the vehicle width direction, a fold-over section 29 folded over from the first extension 27 toward the front side, and a second extension 28 extending from the fold-over section 29 toward the right side along the vehicle width direction.

In the inlet duct 26 of this embodiment, the cross-sectional area of the air flow channel gradually increases from the first extension 27 toward the joint 261.

The resonator 48 is situated on the right side of the case body 21. The resonator 48 is connected to the front side of the bulging section 262 of the inlet duct 26, extending toward the right side while its edge protrudes toward the rear side.

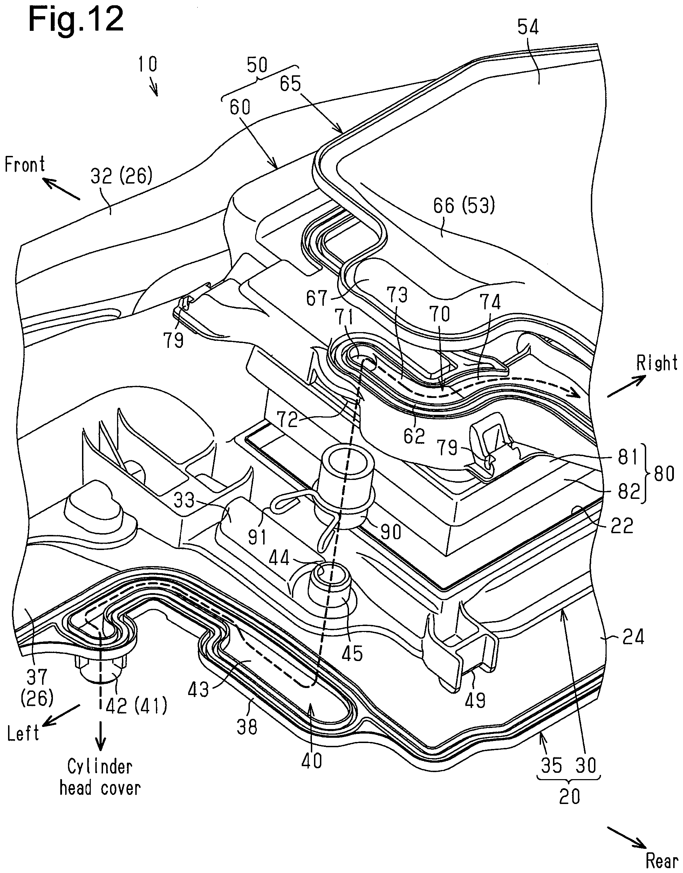

As shown in Fig. 4 and Fig. 12, the case channel 40 is formed across the region from the rear side edge of the first extension 27 of the inlet duct 26 to the left side edge of the peripheral wall 23 of the case body 21.

As shown in Fig. 12, the case channel 40 has an upstream longitudinal hole 41 extending vertically, a lateral hole 43 curving at the upper end of the upstream longitudinal hole 41 while extending along the rear side edge of the first extension 27 and the left side edge of the peripheral wall 23, and a downstream longitudinal hole 44 extending upward while curving at the downstream end, i.e. the rear side, of the lateral hole 43.

As shown in Fig. 4, Fig. 12 and Fig. 14, the upstream end 42 of the upstream longitudinal hole 41 is cylindrical and protrudes downward. The upstream end 42 is fitted within a straight-tube hose (not shown), i.e. a connecting member, the hose being connected to a cylinder head cover (not shown) located directly below it.

As shown in Fig. 4, Fig. 12 and Fig. 15, the downstream end 45 of the downstream longitudinal hole 44 is cylindrical and protrudes upward. The downstream end 45 is fitted within a straight-tube hose (connecting member) 90. The hose 90 is fixed to the downstream end 45 by a clip 91.

As shown in Figs. 2 to 4, the case 20 is composed of 2 parts, a first molded case 30 and a second molded case 35 provided under the first molded case 30.

As shown in Fig. 2, Fig. 4 and Fig. 6, the first molded case 30 has an opening-side peripheral wall section 31 surrounding the opening 22, a first half-inlet duct 32 in the form of a half-tube, extending to and continuous with the opening-side peripheral wall section 31, and a first half-resonator 34 in the form of a half-tube, extending to and continuous with the first half-inlet duct 32. A first case channel-forming section 33 is formed at the left side edge of the opening-side peripheral wall section 31. The first molded case 30 is integrally formed of a hard resin material.

As shown in Fig. 2, Fig. 4 and Fig. 7, the second molded case 35 has a bottom wall 24, a bottom wall-side peripheral wall section 36 continuous with the bottom wall 24, a second half-inlet duct 37 in the form of a half-tube, extending to the bottom wall-side peripheral wall section 36, and a second half-resonator 39 in the form of a half-tube, extending to and continuous with the second half-inlet duct 37. A second case channel-forming section 38 is formed at the left side edge of the bottom wall-side peripheral wall section 36. The second molded case 35 is integrally formed of a hard resin material.

The case 20 is formed by joining together the peripheral edge of the first molded case 30 and the peripheral edge of the second molded case 35 by vibration welding.

Specifically, the case body 21 is formed by joining the peripheral edge of the opening-side peripheral wall section 31 and the peripheral edge of the bottom wall-side peripheral wall section 36. The inlet duct 26 is formed by joining of the peripheral edge of the first half-inlet duct 32 and the peripheral edge of the second half-inlet duct 37. A Helmholtz resonator 48 is formed by joining between the peripheral edge of the first half-resonator 34 and the peripheral edge of the second half-resonator 39.

The case channel 40 is formed by joining between the peripheral edge of the first case channel-forming section 33 and the peripheral edge of the second case channel-forming section 38.

### <Cap 50>

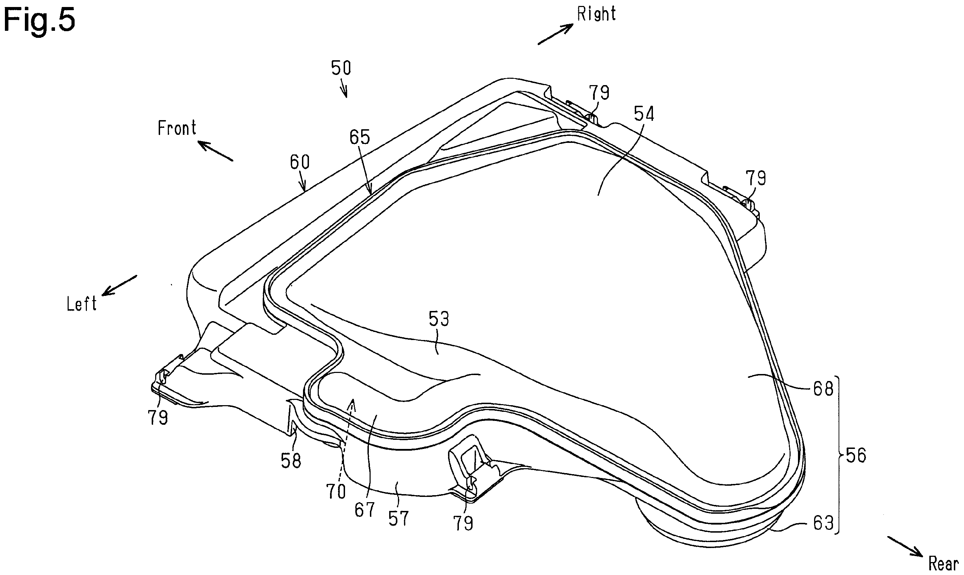

As shown in Fig. 3 and Fig. 5, the cap 50 includes a flat-shaped cap body 51 having a peripheral wall 53 surrounding the opening 52 and a top wall 54, and an outlet 56 integrally formed with the cap body 51.

As shown in Fig. 3, a flange 55 is formed along the entire peripheral edge of the opening 52.

As shown in Fig. 5, a cap channel 70 forming the part of the circulating channel further downstream than the case channel 40, is formed on the left side edge of the peripheral wall 53.

At each of the four corners of the cap body 51, a supporting member 79 is formed serving to support the clamp 95 (see Fig. 1 and Fig. 2) in a tiltable manner.

As shown in Fig. 3 and Fig. 5, the outlet 56 is connected to the rear side of the peripheral wall 53 of the cap body 51 while protruding toward the rear side, its downstream end facing downward.

As shown in Fig. 5 and Fig. 12, the cap channel 70 is formed spanning from the left side edge of the cap body 51 to the left side edge of the outlet 56.

As shown in Fig. 12, the cap channel 70 has a longitudinal hole 71 extending vertically, and a lateral hole 73 extending toward the rear side in a curved manner at the upper end of the longitudinal hole 71 and extending in a further curved manner toward the right side, the downstream end 74 of the lateral hole 73 being connected to the outlet 56.

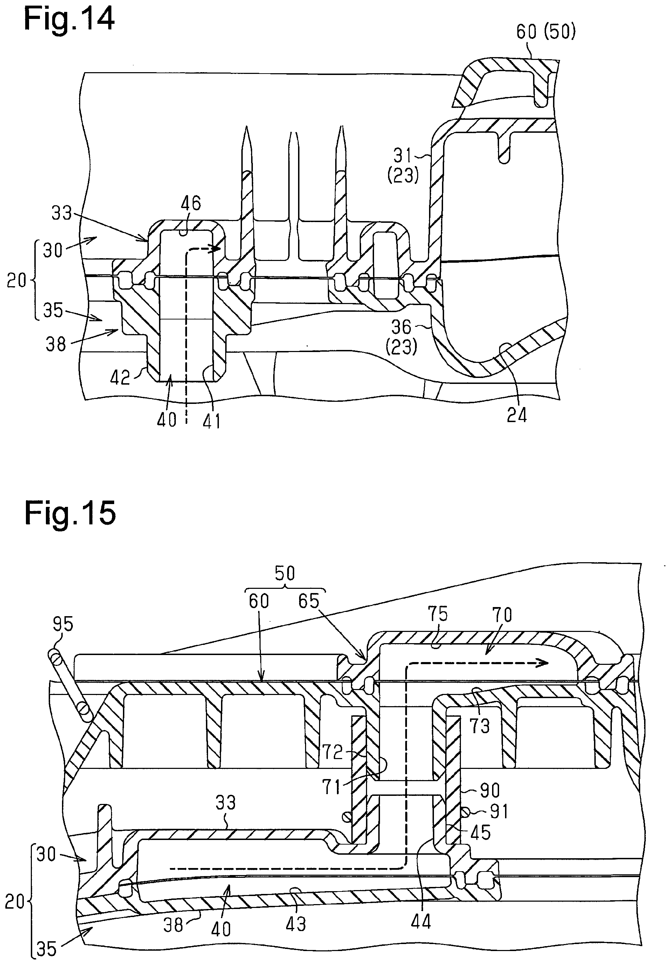

As shown in Fig. 12 and Fig. 15, the upstream end 72 of the longitudinal hole 71 is cylindrical and protrudes downward.

As shown in Fig. 12 and Fig. 15, the downstream end 45 of the case channel 40 and the upstream end 72 of the cap channel 70 are situated on the same axis, and the upstream end 72 of the cap channel 70 is fitted within the hose 90.

As shown in Fig. 2 and Fig. 8 to Fig. 11, the cap 50 is composed of 2 parts, the first molded cap 60 and the second molded cap 65 provided above the first molded cap 60.

As shown in Fig. 2, Fig. 8 and Fig. 9, the first molded cap 60 has an opening-side peripheral wall section 61 surrounding the opening 52, and a first molded outlet 63 extending toward the rear side and continuous with the opening-side peripheral wall section 61. A first cap channel-forming section 62 is formed at the left side edge of the opening-side peripheral wall section 61 and first outlet-forming section 63.

An outer peripheral wall 57 covering the cap body 51 from the outer peripheral side is formed in the first molded cap 60. A supporting member 79 is formed in the outer peripheral wall 57, which has a notch section 58 formed where the upstream end 72 of the cap channel 70 is exposed to outside. The first molded cap 60 is integrally formed of a hard resin material.

As shown in Fig. 2, Fig. 10 and Fig. 11, the second molded cap 65 has a top wall 54 as part of the cap body 51, a top wall-side peripheral wall section 66 continuous with the top wall 54, and a second molded outlet 68 extending toward the rear side and continuous with the top wall-side peripheral wall section 66. A second cap channel-forming section 67 is formed at the left side edge of the top wall-side peripheral wall section 66. The second molded cap 65 is integrally formed of a hard resin material.

As shown in Fig. 2 and Fig. 5, the cap 50 is formed by joining together the peripheral edge of the first molded cap 60 and the peripheral edge of the second molded cap 65 by vibration welding.

Specifically, the cap body 51 is formed by joining the peripheral edge of the opening-side peripheral wall section 61 and the peripheral edge of the top wall-side peripheral wall section 66, while the outlet 56 is formed by joining together the peripheral edge of the first outlet-forming section 63 and the peripheral edge of the second molded outlet 68.

The cap channel 70 is formed by joining together the peripheral edge of the first cap channel-forming section 62 and the peripheral edge of the second cap channel-forming section 67.

### <Filter element 80>

As shown in Fig. 2 and Fig. 3, the filter element 80 has a filtration section 81 formed by pleated folding of a filter medium sheet such as a nonwoven fabric or filter paper, and an annular-shaped sealing unit 82 formed at the peripheral edge of the filtration section 81. The sealing unit 82 is formed of an elastic member such as a closed-cell polyurethane foam.

As shown in Fig. 3, the flange 55 of the cap 50 and the sealing unit 82 are sealed by clamping the sealing unit 82 by the flange 25 of the case 20 and the flange 55 of the cap 50.

The air cleaner 10 has such a design that the upstream end 72 of the cap channel 70 becomes fitted within the hose 90 as the cap 50 is attached to the case 20. The case channel 40 and the cap channel 70 are thus in a communicating configuration.

The following effects can be obtained by the internal combustion engine air cleaner of the embodiment described above.
(1) In the case 20 of the internal combustion engine air cleaner 10, there is formed a case channel 40, which constitutes part of a circulating channel serving to circulate blow-by gas of the internal combustion engine to the intake air channel. The cap channel 70 forming the part of the circulating channel further downstream than the case channel 40 is formed in the cap 50. The case channel 40 and the cap channel 70 are configured so as to be in a communicating configuration as the case 20 and the cap 50 are assembled.
   With this configuration, assembly of the case 20 and cap 50 of the air cleaner 10 results in a communicating relationship between the case channel 40 and cap channel 70 as parts of the circulating channel through which the internal combustion engine blow-by gas is caused to circulate to the intake air channel.
   This allows shortening of the length of the hose forming part of the circulating channel of the blow-by gas, eliminating the need for a specially-shaped hose. The configuration of the parts surrounding the air cleaner 10 can thus be simplified.
(2) The case channel 40 is formed at the edge of the case body 21 and the cap channel 70 is formed at the edge of the cap body 51.
   With this configuration, it is possible to avoid effects on the shape of the interior space of the case body 21, i.e. the intake air channel, when the case channel 40 is provided in the case 20. It is also possible to avoid effects on the shape of the interior space of the cap body 51, i.e. the intake air channel, when the cap channel 70 is provided in the cap 50.
(3) The downstream end 45 of the case channel 40 and the upstream end 72 of the cap channel 70 are situated on the same axis.
   With this configuration, it is possible to easily allow communication between the case channel 40 and the cap channel 70, by assembling the air cleaner 10 so that the opening 22 of the case 20 and the opening 52 of the cap 50 face each other. Attachment of the case 20 and cap 50 is therefore facilitated.
(4) The straight-tube hose 90 is disposed between the downstream end 45 of the case channel 40 and the upstream end 72 of the cap channel 70.
   With this configuration, the downstream end 45 of the case channel 40 and the upstream end 72 of the cap channel 70 communicate via the hose 90.
   In addition, the straight-tube hose 90 functions as a guide during attachment of the cap 50 to the case 20, thereby facilitating attachment between the case 20 and the cap 50.
(5) The hose 90 is fixed to the downstream end 45 of the case channel 40.
   The hose 90 can potentially become detached from the case 20 during removal of the cap 50 from the case 20. When this occurs, the hose 90 must be reattached to the downstream end 45 of the case channel 40 during attachment of the cap 50 to the case 20, thus complicating the attachment operation.
   However, since the hose 90 is fixed to the downstream end 45 of the case channel 40 in this configuration, the hose 90 does not become detached from the case 20 when the cap 50 is removed from the case 20. This eliminates the need to reattach the hose 90 to the downstream end 45 of the case channel 40 when the cap 50 is attached to the case 20, and facilitates attachment of the cap 50 to the case 20.
(6) The cap 50 has an outer peripheral wall 57 that covers the cap body 51 from the outer peripheral side. In the outer peripheral wall 57, there is formed a notch section 58 where the upstream end 72 of the cap channel 70 is exposed to outside.
   If the upstream end 72 of the cap channel 70 is covered by the outer peripheral wall 57 and is not exposed to outside, then it is difficult for an operator to visually determine whether or not the upstream end 72 of the cap channel 70 is inserted up to its normal position in the hose 90 that is fixed to the downstream end 45 of the case channel 40.
   The configuration described above therefore has the upstream end 72 of the cap channel 70 exposed to outside through the notch section 58, so that an operator can visually determine that the upstream end 72 of the cap channel 70 is inserted up to its normal position in the hose 90.
(7) The downstream end 74 of the cap channel 70 is connected to the outlet 56.
   If the downstream end 74 of the cap channel 70 is connected to the cap body 51, the blow-by gas circulates into the cap body 51. Therefore, when the cap body 51 of this embodiment is flat-shaped, oil mist contained in the blow-by gas tends to adhere to the filtration section 81 of the filter element 80, potentially impairing the filtration performance of the filtration section 81.
   However, since the downstream end 74 of the cap channel 70 is connected to the outlet 56 in the configuration described above, blow-by gas flows further downstream than the outlet 56 and helps to avoid adhesion of oil mist onto the filtration section 81 of the filter element 80.
(8) The case channel 40 has an upstream longitudinal hole 41 extending upward from the upstream end 42, and a lateral hole 43 extending in a curved manner at the upper end of the upstream longitudinal hole 41.
   When the blow-by gas passes through the curved section between the upstream longitudinal hole 41 and lateral hole 43 of the case channel 40, as indicated by the dashed arrow in Fig. 14, the configuration described above allows oil mist contained in the blow-by gas to be easily separated by impact with the ceiling face 46 of the curved section. Inflow of oil mist contained in the blow-by gas into the intake air channel can therefore be minimized.
(9) The cap channel 70 has a longitudinal hole 71 extending upward from the upstream end 72, and a lateral hole 73 extending in a curved manner from the upper end of the longitudinal hole 71.
   When the blow-by gas passes through the curved section between the longitudinal hole 71 and lateral hole 73 of the cap channel 70, as indicated by the dashed arrow in Fig. 15, the configuration described above allows oil mist contained in the blow-by gas to be easily separated by impact with the ceiling face 75 of the curved section, thus helping to minimize inflow of oil mist contained in the blow-by gas into the intake air channel.
(10) The case 20 includes a first molded case 30 with an opening-side peripheral wall section 31 and a first case channel-forming section 33, and a second molded case 35 with a bottom wall 24, a bottom wall-side peripheral wall section 36 and a second case channel-forming section 38. The case body 21 is formed by joining the peripheral edge of the opening-side peripheral wall section 31 and the peripheral edge of the bottom wall-side peripheral wall section 36. The case channel 40 is formed by joining the first case channel-forming section 33 and the second case channel-forming section 38.
   In this configuration, the case channel 40 is formed by joining the first case channel-forming section 33 and the second case channel-forming section 38. This allows the case 20 to be easily formed even when the shape of the case channel 40 is complex and poorly suited for die cutting.
(11) The cap 50 includes a first molded cap 60 with an opening-side peripheral wall section 61 and a first cap channel-forming section 62, and a second molded cap 65 with a top wall 54, a top wall-side peripheral wall section 66 and a second cap channel-forming section 67. The cap body 51 is formed by joining the peripheral edge of the opening-side peripheral wall section 61 and the peripheral edge of the top wall-side peripheral wall section 66. The cap channel 70 is formed by joining together the first cap channel-forming section 62 and the second cap channel-forming section 67.
   In this configuration, the cap channel 70 is formed by joining together the first cap channel-forming section 62 and the second cap channel-forming section 67. This allows the cap 50 to be easily formed even when the shape of the cap channel 70 is complex and poorly suited for die cutting.
(12) The case 20 has a first molded case 30 including the opening-side peripheral wall section 31 and the first half-inlet duct 32, and a second molded case 35 including the bottom wall 24 of the case body 21, the bottom wall-side peripheral wall section 36 and the second half-inlet duct 37. The case body 21 is formed by joining the peripheral edge of the opening-side peripheral wall section 31 and the peripheral edge of the bottom wall-side peripheral wall section 36. The inlet duct 26 is formed by joining of the peripheral edge of the first half-inlet duct 32 with the peripheral edge of the second half-inlet duct 37.
   Since the inlet duct 26 is integrally formed with the case body 21 in this configuration, this differs from the conventional configuration in which a separate inlet duct is connected to the inlet of the case, and can therefore avoid the non-flush surface formed when a separate inlet duct is connected to the inner peripheral surface of the intake air channel. This will help minimize disturbances to the flow of air.
   The integral structure of the inlet duct 26 with the case body 21 also allows opening and closing by simply lifting the cap 50. This will allow the filter element 80 to be replaced in a more efficient manner.
   However, integral formation of the inlet duct 26 with the case body 21 means that the case 20 becomes more difficult to mold when the shape of the inlet duct 26 is complex and poorly suited for die cutting.
   Therefore, in the configuration described above, the case 20 is formed by joining the first molded case 30 that includes the opening-side peripheral wall section 31 and the first half-inlet duct 32, with the second molded case 35 that includes the bottom wall 24, the bottom wall-side peripheral wall section 36 and the second half-inlet duct 37. Each of the molded cases 30, 35 can therefore be easily molded and formation of the case 20 is facilitated.
(13) The inlet duct 26 has a fold-over section 29.
   Die cutting of the fold-over section 29 of the inlet duct 26 is difficult along the direction in which it extends.
   Therefore, in the configuration described above, the inlet duct 26 has a split structure of the first half-inlet duct 32 and the second half-inlet duct 37, so that it becomes easier to integrally form the case 20 with the inlet duct 26.
(14) The inlet duct 26 has a joint 261 extending in the peripheral direction while being connected to the front side of the peripheral wall 23 of the case body 21, a bulging section 262 bulging out from the joint 261 toward the front side, and a first extension 27 connected to one end in the peripheral direction of the bulging section 262 and extending along it. The cross-sectional area of the air flow channel gradually increases from the first extension 27 toward the joint 261.
   With this configuration, air flows into the case body 21 through the first extension 27, bulging section 262 and joint 261 of the inlet duct 26. Since the cross-sectional area of the air flow channel gradually increases from the first extension 27 toward the joint 261, sudden decreases in air pressure can be minimized, thus also minimizing disturbances to the flow of air.
(15) A half-tube-shaped first half-resonator 34 is formed in the first molded case 30. A half-tube-shaped second half-resonator 39 is likewise formed in the second molded case 35. A Helmholtz resonator 48 is formed by joining between the peripheral edge of the first half-resonator 34 and the peripheral edge of the second half-resonator 39.

Since the resonator 48 is integrally formed with the inlet duct 26 in this configuration, there is no need for an additional step to attach the resonator 48 to the inlet duct 26.

### <Modifications>

The embodiment described above may be modified as follows.
- The inlet duct 26 and the resonator 48 may be formed separately. In this case, the resonator may be connected to the inlet duct.
- The case body 21 and the inlet duct 26 may be formed separately. In this case, the inlet duct may be connected to an inlet of the case.
- The shapes of the case channel 40 and cap channel 70 may be modified as appropriate. For example, the case channel and the cap channel may be formed with only longitudinal holes.
- At a certain minimum height of the peripheral wall 53 of the cap body 51, the downstream end of the cap channel may be connected to the upper part of the peripheral wall of the cap body, which is distant from the filtration section 81 of the filter element 80.
- The notch section 58 of the outer peripheral wall 57 of the cap body 51 may be omitted.
- The clip 91 may also be omitted. In other words, the hose 90 need not be fixed to the downstream end 45 of the case channel 40.
- In the embodiment described above, the downstream end 45 of the case channel 40 and the upstream end 72 of the cap channel 70 are situated on the same axis, but they may instead be situated on different axes. In such cases, a hose with multiple curved sections can be used to connect the downstream end of the case channel with the upstream end of the cap channel. In this case as well, the length of the special hose can be shortened and the configuration surrounding the air cleaner can be simplified.
- The case channel may be formed inside the case body, and the cap channel may also be formed inside the cap body.

An internal combustion engine air cleaner (10) includes a case (20) with an inlet duct (26), a cap (50) with an outlet (56), and a filter element (80) provided between an opening (22) in the case (20) and an opening (52) in the cap (50) facing the case opening (22). In the case (20), there is formed a case channel (40), which constitutes part of a circulating channel serving to circulate blow-by gas of the internal combustion engine to the intake air channel. The cap channel (70) forming the part of the circulating channel further downstream than the case channel (40) is formed in the cap (50). The case channel (40) and the cap channel (70) are configured so that they are communicating when the case (20) and the cap (50) are assembled.

## Claims

1. An internal combustion engine air cleaner comprising a case (20) having an inlet duct (26), a cap (50) having an outlet (56), and a filter element (80) provided between an opening (22) in the case (20) and an opening (52) in the cap (50) facing the opening (22) of the case (20), wherein
a case channel (40) is formed at an edge of the case (20), constituting part of a circulating channel through which internal combustion engine blow-by gas is caused to circulate to an intake air channel, and
a cap channel (70) is formed at an edge of the cap (50), constituting a part of the circulating channel further downstream than the case channel (40),
the configuration being such that the case channel (40) and the cap channel (70) are in communication as the case (20) and cap (50) are assembled, **characterized in that**
the case (20) comprises a first molded case (30) having an opening-side peripheral wall section (31) surrounding the opening (22) and a first case channel-forming section (33) that is continuous with the opening-side peripheral wall section (31), and a second molded case (35) comprising a bottom wall (24) of the case (20), a bottom wall-side peripheral wall section (36) that is continuous with the bottom wall (24), and a second case channel-forming section (38) that is formed at an edge of the bottom wall-side peripheral wall section (36),
a case body (21) is formed by joining of the peripheral edge of the opening-side peripheral wall section (31) with the peripheral edge of the bottom wall-side peripheral wall section (36), and
the case channel (40) is formed by joining of the first case channel-forming section (33) with the second case channel-forming section (38).

2. An internal combustion engine air cleaner comprising a case (20) having an inlet duct (26), a cap (50) having an outlet (56), and a filter element (80) provided between an opening (22) in the case (20) and an opening (52) in the cap (50) facing the opening (22) of the case (20), wherein
a case channel (40) is formed at an edge of the case (20), constituting part of a circulating channel through which internal combustion engine blow-by gas is caused to circulate to an intake air channel, and
a cap channel (70) is formed at an edge of the cap (50), constituting a part of the circulating channel further downstream than the case channel (40),
the configuration being such that the case channel (40) and the cap channel (70) are in communication as the case (20) and cap (50) are assembled, **characterized in that**
the cap (50) comprises a first molded cap (60) having an opening-side peripheral wall section (61) surrounding the opening (52) and a first cap channel-forming section (62) that is continuous with the opening-side peripheral wall section (61), and a second molded cap (65) comprising a top wall (54) of the cap (50), a top wall-side peripheral wall section (66) that is continuous with the top wall (54), and a second cap channel-forming section (67) formed at an edge of the top wall (54),
a cap body (51) is formed by joining of the peripheral edge of the opening-side peripheral wall section (61) with the peripheral edge of the top wall-side peripheral wall section (66), and
the cap channel (70) is formed by joining of the first cap channel-forming section (62) with the second cap channel-forming section (67).

3. The internal combustion engine air cleaner according to claim 1 or 2,
wherein the downstream end (45) of the case channel (40) and the upstream end (72) of the cap channel (70) are situated on the same axis.

4. The internal combustion engine air cleaner according to claim 3,
wherein a straight-tube connecting member (90) is disposed between the downstream end (45) of the case channel (40) and the upstream end (72) of the cap channel (70).

5. The internal combustion engine air cleaner according to claim 4,
wherein the connecting member (90) is fixed to the downstream end (45) of the case channel (40).

6. The internal combustion engine air cleaner according to any one of claims 1 to 5, wherein
the cap (50) has an outer peripheral wall (57), and
a notch section (58) is formed in the outer peripheral wall (57), causing the upstream end (72) of the cap channel (70) to be exposed to outside.

7. The internal combustion engine air cleaner according to any one of claims 1 to 6, wherein the downstream end (74) of the cap channel (70) is connected to the outlet (56).

8. The internal combustion engine air cleaner according to any one of claims 1 to 7, wherein the case channel (40) has a longitudinal hole (41) extending upward from an upstream end (42) thereof, and a lateral hole (43) extending in a curved manner at an upper end of the longitudinal hole (41).

9. The internal combustion engine air cleaner according to any one of claims 1 to 8, wherein the cap channel (70) has a longitudinal hole (71) extending upward from an upstream end (72) thereof, and a lateral hole (73) extending in a curved manner from an upper end of the longitudinal hole (71).

## Patentansprüche

1. Brennkraftmaschinenluftfilter, mit einem Gehäuse (20), das eine Einlassleitung (26) hat, einem Deckel (50), der einen Auslass (56) hat, sowie einem Filterelement (80), das zwischen einer Öffnung (22) in dem Gehäuse (20) und einer Öffnung (52) in dem Deckel (50) vorgesehen ist, die der Öffnung (22) des Gehäuses (20) gegenüberliegt, wobei
ein Gehäusekanal (40) an einem Rand des Gehäuses (20) ausgebildet ist, der einen Teil eines Zirkulationskanals darstellt, durch den ein Brennkraftmaschinenleckgas zu einem Eintrittsluftkanal zirkuliert wird, und
ein Deckelkanal (70) an einem Rand des Deckels (50) ausgebildet ist, der einen Teil des Zirkulationskanals darstellt, der weiter stromabwärts ist als der Gehäusekanal (40),
die Konfiguration so ist, dass der Gehäusekanal (40) und der Deckelkanal (70) in Verbindung sind, wenn das Gehäuse (20) und der Deckel (50) zusammengebaut sind, **dadurch gekennzeichnet, dass**
das Gehäuse (20) ein erstes Formgehäuse (30), das einen öffnungsseitigen Umfangswandabschnitt (31), der die Öffnung (22) umgibt, und einen ersten Gehäusekanalausbildungsabschnitt (33) hat, der mit dem öffnungsseitigen Umfangswandabschnitt (31) durchgängig ist, sowie ein zweites Formgehäuse (35) aufweist, das eine Bodenwand (24) des Gehäuses (20), einen bodenwandseitigen Umfangswandabschnitt (36), der mit der Bodenwand (24) durchgängig ist, und einen zweiten Gehäusekanalausbildungsabschnitt (38) aufweist, der an einem Rand des bodenwandseitigen Umfangswandabschnitts (36) ausgebildet ist,
ein Gehäusekörper (21) durch ein Zusammenfügen des Umfangsrands des öffnungsseitigen Umfangswandabschnitts (31) mit dem Umfangsrand des bodenwandseitigen Umfangswandabschnitts (36) ausgebildet ist, und
der Gehäusekanal (40) durch Zusammenfügen des ersten Gehäusekanalausbildungsabschnitts (33) mit dem zweiten Gehäusekanalausbildungsabschnitt (38) ausgebildet ist.

2. Brennkraftmaschinenluftfilter, mit einem Gehäuse (20), das eine Einlassleitung (26) hat, einem Deckel (50), der einen Auslass (56) hat, sowie einem Filterelement (80), das zwischen einer Öffnung (22) in dem Gehäuse (20) und einer Öffnung (52) in dem Deckel (50) vorgesehen ist, die der Öffnung (22) des Gehäuses (20) gegenüberliegt, wobei
ein Gehäusekanal (40) an einem Rand des Gehäuses (20) ausgebildet ist, der einen Teil eines Zirkulationskanals darstellt, durch den ein Brennkraftmaschinenleckgas zu einem Eintrittsluftkanal zirkuliert wird, und
ein Deckelkanal (70) an einem Rand des Deckels (50) ausgebildet ist, der einen Teil des Zirkulationskanals darstellt, der weiter stromabwärts ist als der Gehäusekanal (40),
die Konfiguration so ist, dass der Gehäusekanal (40) und der Deckelkanal (70) in Verbindung sind, wenn das Gehäuse (20) und der Deckel (50) zusammengebaut sind, **dadurch gekennzeichnet, dass**
der Deckel (50) einen ersten Formdeckel (60), der einen öffnungsseitigen Umfangswandabschnitt (61), der die Öffnung (52) umgibt, und einen ersten Deckelkanalausbildungsabschnitt (62) hat, der mit dem öffnungsseitigen Umfangswandabschnitt (61) durchgängig ist, sowie einen zweiten Formdeckel (65) aufweist, der eine Oberwand (54) des Deckels (50), einen oberwandseitigen Umfangswandabschnitt (66), der mit der Oberwand (54) durchgängig ist, sowie einen zweiten Deckelkanalausbildungsabschnitt (67) aufweist, der an einem Rand der Oberwand (54) ausgebildet ist,
ein Deckelkörper (51) durch Zusammenfügen des Umfangsrands des öffnungsseitigen Umfangswandabschnitts (61) mit dem Umfangsrand des oberwandseitigen Umfangswandabschnitts (66) ausgebildet ist, und
der Deckelkanal (70) durch Zusammenfügen des ersten Deckelkanalausbildungsabschnitts (62) mit dem zweiten Deckelkanalausbildungsabschnitt (67) ausgebildet ist.

3. Brennkraftmaschinenluftfilter nach Anspruch 1 oder 2,
wobei das stromabwärtige Ende (45) des Gehäusekanals (40) und das stromaufwärtige Ende (72) des Deckelkanals (70) auf derselben Achse angeordnet sind.

4. Brennkraftmaschinenluftfilter nach Anspruch 3,
wobei ein Verbindungselement (90) eines geraden Rohrs zwischen dem stromabwärtigen Ende (45) des Gehäusekanals (40) und dem stromaufwärtigen Ende (72) des Deckelkanals (70) angeordnet ist.

5. Brennkraftmaschinenluftfilter nach Anspruch 4,
wobei das Verbindungselement (90) an dem stromabwärtigen Ende (45) des Gehäusekanals (40) fixiert ist.

6. Brennkraftmaschinenluftfilter nach einem der Ansprüche 1 bis 5, wobei
der Deckel (50) eine Außenumfangswand (57) hat, und
ein Aussparungsabschnitt (58) in der Außenumfangswand (57) ausgebildet ist, der bewirkt, dass das stromaufwärtige Ende (72) des Deckelkanals (70) nach außen frei liegt.

7. Brennkraftmaschinenluftfilter nach einem der Ansprüche 1 bis 6, wobei das stromabwärtige Ende (74) des Deckelkanals (70) mit dem Auslass (56) verbunden ist.

8. Brennkraftmaschinenluftfilter nach einem der Ansprüche 1 bis 7, wobei der Gehäusekanal (40) ein Längsloch (41), das sich von seinem stromaufwärtigen Ende (42) nach oben erstreckt, sowie ein Querloch (43) hat, das sich in einer gekrümmten Weise an einem oberen Ende des Längslochs (41) erstreckt.

9. Brennkraftmaschinenluftfilter nach einem der Ansprüche 1 bis 8, wobei der Deckelkanal (70) ein Längsloch (71), das sich von seinem stromaufwärtigen Ende (72) nach oben erstreckt, sowie ein Querloch (73) hat, das sich in einer gekrümmten Weise von einem oberen Ende des Längslochs (71) erstreckt.

## Revendications

1. Epurateur d'air pour moteur à combustion interne comprenant un boîtier (20) ayant un conduit d'entrée (26), un capuchon (50) ayant une sortie (56), et un élément filtrant (80) prévu entre une ouverture (22) dans le boîtier (20) et une ouverture (52) dans le capuchon (50) faisant face à l'ouverture (22) du boîtier (20), dans lequel :
un canal de boîtier (40) est formé au niveau d'un bord du boîtier (20), constituant une partie d'un canal de circulation à travers lequel le gaz de carter de moteur à combustion interne est amené à circuler vers le canal d'air d'admission, et
un canal de capuchon (70) est formé au niveau d'un bord du capuchon (50), constituant une partie du canal de circulation davantage en aval que le canal de boîtier (40),
la configuration étant telle que le canal de boîtier (40) et le canal de capuchon (70) sont en communication lorsque le boîtier (20) et le capuchon (50) sont assemblés, **caractérisé en ce que** :
le boîtier (20) comprend un premier boîtier moulé (30) ayant une section de paroi périphérique du côté de l'ouverture (31) entourant l'ouverture (22) et une première section de formation de canal de boîtier (33) qui est continue avec la section de paroi périphérique du côté de l'ouverture (31), et un second boîtier moulé (35) comprenant une paroi inférieure (24) du boîtier (20), une section de paroi périphérique du côté de la paroi inférieure (36) est continue avec la paroi inférieure (24), et une seconde section de formation de canal de boîtier (38) qui est formée au niveau d'un bord de la section de paroi périphérique du côté de la paroi inférieure (36),
un corps de boîtier (21) est formé en assemblant le bord périphérique de la section de paroi périphérique du côté de l'ouverture (31) avec le bord périphérique de la section de paroi périphérique du côté de la paroi inférieure (36), et
le canal de boîtier (40) est formé en assemblant la première section de formation de canal de boîtier (33) avec la seconde section de formation de canal de boîtier (38).

2. Epurateur d'air pour moteur à combustion interne comprenant un boîtier (20) ayant un conduit d'entrée (26), un capuchon (50) ayant une sortie (56), un élément filtrant (80) prévu entre une ouverture (22) dans le boîtier (20) et une ouverture (52) dans le capuchon (50) faisant face à l'ouverture (22) du boîtier (20), dans lequel :
un canal de boîtier (40) est formé au niveau d'un bord du boîtier (20), constituant une partie du canal de circulation à travers laquelle le gaz de carter de moteur à combustion interne est amené à circuler jusqu'au canal d'air d'admission, et
un canal de capuchon (70) est formé au niveau d'un bord du capuchon (50), constituant une partie du canal de circulation davantage en aval que le canal de boîtier (40),
la configuration étant telle que le canal de boîtier (40) et le canal de capuchon (70) sont en communication lorsque le boîtier (20) et le capuchon (50) sont assemblés, **caractérisé en ce que** :
le capuchon (50) comprend un premier capuchon moulé (60) ayant une section de paroi périphérique du côté de l'ouverture (61) entourant l'ouverture (52) et une première section de formation de canal de capuchon (62) qui est continue avec la section de paroi périphérique du côté de l'ouverture (61), et un second capuchon moulé (65) comprenant une paroi supérieure (54) du capuchon (50), une section de paroi périphérique du côté de la paroi supérieure (66) qui est continue avec la paroi supérieure (54) et une seconde section de formation de canal de capuchon (67) formée au niveau d'un bord de la paroi supérieure (54),
un corps de capuchon (51) est formé en assemblant le bord périphérique de la section de paroi périphérique du côté de l'ouverture (61) avec le bord périphérique de la section de paroi périphérique du côté de la paroi supérieure (66), et
le canal de capuchon (70) est formé en assemblant la première section de formation de canal de capuchon (62) avec la seconde section de formation de canal de capuchon (67).

3. Epurateur d'air pour moteur à combustion interne selon la revendication 1 ou 2,
dans lequel l'extrémité en aval (45) du canal de boîtier (40) et l'extrémité en amont (72) du canal de capuchon (70) sont situées sur le même axe.

4. Epurateur d'air pour moteur à combustion interne selon la revendication 3,
dans lequel l'élément de raccordement de tube droit (90) est disposé entre l'extrémité en aval (45) du canal de boîtier (40) et l'extrémité en amont (72) du canal de capuchon (70).

5. Epurateur d'air pour moteur à combustion interne selon la revendication 4,
dans lequel l'élément de raccordement (90) est fixé à l'extrémité en aval (45) du canal de boîtier (40).

6. Epurateur d'air pour moteur à combustion interne selon l'une quelconque des revendications 1 à 5, dans lequel :
le capuchon (50) a une paroi périphérique externe (57), et
une section d'encoche (58) est formée dans la paroi périphérique externe (57), amenant l'extrémité en amont (72) du canal de capuchon (70) à être exposée à l'extérieur.

7. Epurateur d'air pour moteur à combustion interne selon l'une quelconque des revendications 1 à 6, dans lequel l'extrémité en aval (74) du canal de capuchon (70) est raccordée à la sortie (56).

8. Epurateur d'air pour moteur à combustion interne selon l'une quelconque des revendications 1 à 7, dans lequel le canal de boîtier (40) a un trou longitudinal (41) s'étendant vers le haut à partir de son extrémité en amont (42), et un trou latéral (43) s'étendant d'une manière incurvée au niveau d'une extrémité supérieure du trou longitudinal (41).

9. Epurateur d'air pour moteur à combustion interne selon l'une quelconque des revendications 1 à 8, dans lequel le canal de capuchon (70) a un trou longitudinal (71) s'étendant vers le haut à partir de son extrémité en amont (72), et un trou latéral (73) s'étendant d'une manière incurvée à partir d'une extrémité supérieure du trou longitudinal (71).
